**Europäisches Patentamt**

**European Patent Office**

**Office européen des brevets**

(11) Veröffentlichungsnummer: **0 399 309**

**A2**

(12) **EUROPÄISCHE PATENTANMELDUNG**

(21) Anmeldenummer: **90108881.5**

(22) Anmeldetag: **11.05.90**

(51) Int. Cl.⁵: **B01D 29/23, B01D 29/88, B01D 63/06**

(30) Priorität: **23.05.89 DE 3916744**

(43) Veröffentlichungstag der Anmeldung:
**28.11.90 Patentblatt 90/48**

(84) Benannte Vertragsstaaten:
**DE IT NL**

(71) Anmelder: **Sartorius GmbH.**
**Weender Landstrasse 94-108**
**D-3400 Göttingen(DE)**

(72) Erfinder: **Hoffmann, Jürgen, Dr.**
**Gartenstrasse 21**
**D-3414 Hardegsen-Ellierode(DE)**

(74) Vertreter: **Köhler, Rudolf**
**c/o Sartorius GmbH Weender Landstrasse**
**94-108**
**D-3400 Göttingen(DE)**

(54) **Rohrförmiges Filterelement.**

(57) Bei einem rohrförmigen Filterelement aus mindestens einem Filterblatt, welches in Parallelfalten plissiert und an seinen beiden Faltenenden zu einem hohlzylindrischen Filterkörper (F) verbunden ist, dessen beide Stirnflächen durch Endkappen (11, 13) dichtend eingefaßt sind und von denen mindestens eine Endkappe (13) als Anschlußkappe den Hohlkern (10') zur Verbindung mit einem Gehäuseraum (3) eines umgebenden Gehäuses öffnet, erfolgt die zwangsweise Strömungsführung des zu behandelnden Fluids längs der Falten (10) durch ein den Hohlkern (10') des Filterkörpers (F) durchsetzenden, an den faltenkanten des Filterkörpers (F) anliegenden Rohres (6,6',5), welches an einem Ende im Bereich der als Auslaß oder Einlaß (20) dienenden Faltenbereiches offen ist und im Bereich des als Einlaß oder Auslaß (21) dienenden Faltenbereichs diesen freigebend verjüngt ist und koaxial zu der die Gehäuseverbindung herstellenden Anschlußkappe (13) für den zu behandelnden Fluidstrom einen Anschluß (5) für den rezirkulierenden Fluidstrom bildet. Der koaxial zur Anschlußkappe (13) angeordnete Anschluß (5) und das an den Faltenkanten anliegende Rohr (6,6') ist im Gehäuseanschluß (4) zur Retentatführung fixiert und entweder Bestandteil des Gehäuses (1,2) oder das Rohr (6,6') ist Bestandteil des auswechselbaren Filterelementes. Das Trennelement dient zur rezirkulierenden Überströmung von zu behandelnden Fluiden zur Durchführung von Filtrations-, Pervaporations- und Chromatographieprozessen.

**Fig. 1**

## Rohrförmiges Filterelement

Die Erfindung betrifft ein rohrförmiges Filterelement aus mindestens einem Filterblatt, welches in parallele Falten plissiert an seinen beiden Faltenenden zu einem hohlzylindrischen Filterkörper verbunden ist, dessen beide Stirnflächen durch Endkappen dichtend eingefaßt sind und von denen mindestens eine Endkappe (Anschlußkappe) den Hohlkern zur Verbindung mit einem Gehäuseraum eines umgebenden Gehäuses öffnet und bei dem das zu behandelnde Fluid in Strömungspfaden längs des Filterblattes zwangsweise rezirkulierend zwischen einem Einlaß in die Falten an einem Rohrende und einem Auslaß am anderen Rohrende als Retentat geführt und bei dem das Permeat aus einem weiteren Gehäuseraum abführbar ist.

Ein vergleichbares Filterelement ist beispielsweise bekannt aus der DE-OS 29 05 897. Bei dieser bekannten Ausführungsform sind eine Filtereigenschaften aufweisende Membran, eine diese Membran drainierende Stützschicht und eine im wesentlichen fluidundurchlässige Folie aufeinanderliegend in Falten plissiert und an ihren Faltenenden zu einem Hohlzylinder verbunden und mit Endkappen eingefaßt.

Hierbei ist die im wesentlichen fluidundurchlässige Folie an beiden Rohrenden verkürzt nach Art einer Manschette ausgeführt, so daß die drainierende Stützschicht an beiden Rohrenden keine fluiddichte Folie aufweist und damit offen ist und eine zwangsweise Führung von Flüssigkeit in diesen Falten möglich ist. Hierzu ist es jedoch notwendig, daß die von der Folie abgedeckten peripheren Faltenöffnungen durch eine zusätzliche Dichtungseinheit auch in der Tiefe der Plissierung verschlossen sind und diese Dichtungseinheit auch den Rohrkörper gegenüber einem umgebenden Gehäuse abdichtet. Der Fertigungsaufwand und konstruktive Aufwand bezüglich der Strömungsführung im Gehäuse ist sehr groß. Der Einsatz einer derartigen Konstruktion erfolgt daher nur in relativ kleinformatigen Filtereinheiten bei denen das Gehäuse meist Bestandteil einer Wegwerfeinheit ist.

Bei der vorstehend beschriebenen bekannten Ausführungsform soll bei der Filtration stark kolloidal belasteter Fluide eine irreversible Verblockung des Filterelementes durch rezirkulierende Überströmung verhindert werden. Bei Filterelementen in Plattenbauweise hat sich die Überströmung der Filterflächen im Cross-Flow-Betrieb bewährt, da sich der unerwünschte Deckschichtaufbau des Filters während des Filtrationsprozesses dadurch weitgehend vermeiden läßt, daß das Medium mit hoher Geschwindigkeit die Filterfläche unter Einbeziehung von Turbulenzen erzeugenden Schikanen überströmt, die eine Deckschichtbildung während des Filtrationsvorganges verzögern. Entscheidende Einflußgrößen hierfür sind die Überströmgeschwindigkeit, Spalthöhe, Spaltgeometrie, Filter-Wechselwirkungen und weitere Faktoren.

Eine rezirkulierende Überströmung derartiger Filterflächen hat weiterhin den Vorteil, daß das zu behandelnde Medium immer in Bewegung und im Gleichgewicht bleibt, auch wenn im Prozeß an der Entnahmestelle zeitweise kein Filtrat abgenommen wird.

Wird dagegen nicht rezirkuliert, führen Stillstandszeiten an verschiedenen Kontaktstellen durch Einstellung unterschiedlicher chemischen Gleichtgewichten zu unterschiedlicher Zusammensezung oder fördern eine Verkeimung, Sedimentation usw. Aus diesen Gründen bietet eine Überströmung im Sinne einer Rezirkulation zur Einstellung eines permanenten Gleichgewichtes Vorteile.

Auch bei der Durchführung von Pervaporationsprozessen ohne Rezirkulation des zu behandelnden Mediums verarmt die auszutragende Komponente an der Oberfläche des Trennelementes. Dadurch nimmt die Trennleistung ab. Eine permanente Überströmung im engen Spalt bei geeigneter Überströmgeschwindigkeit verhindert dagegen eine Konzentrationspolarisation an der Oberfläche des Trennelementes.

Ist ein Filter verblockt oder wirkt die Oberfläche durch Belagbildung (Fouling) nicht mehr bzw. ist die wirksame Oberflächenkomponente erschöpft, so wird aus wirtschaftlichen Gründen versucht, dieses zu reinigen bzw. zu regenerieren. Dies ist durch gesteuerte Überströmung der gesamten Fläche mit spezifischen Regenerations- und Reinigungsmedien, die chemisch und/oder physikalisch wirken, optimal möglich. Kontaktzeiten, Konzentrationen usw. können gesteuert werden. Bei Chromatographieprozessen sorgt die Überströmung auch dafür, daß eine vollständige Elution möglich ist.

Aufgrund der komplizierten Strömungsführung und dem damit verbundenen Fertigungsaufwand sowie den konstruktiven Aufwand für die Gehäusekonstruktion bei geringer Variabilität des Gesamtsystems haben sich die eingangs genannten rohrförmigen Filterelemente mit Zwangsüberströmung nach der DE-OS 29 05 897 selbst nicht für die in der Beschreibung genannten Einsatzgebiete durchgesetzt.

Der Erfindung liegt daher die Aufgabe zugrunde, mit einfachen konstruktiven Mitteln ein Trennbzw. Filterelement der eingangs genannten großflächigen Art so weiterzubilden, daß neben einem vereinfachten Aufbau und bezogen auf diverse Anwendungen und verbesserte Variabiliät auch eine vereinfachte Handhabung bei dessen Einbau in ein umgebendes Gehäuse und eine vereinfachte Strömungsführung gegeben ist.

Diese Aufgabe wird erfindungsgemäß durch die im Hauptanspruch angebenden Merkmale gelöst. Vorteilhafte Weiterbildungen sind in den Unteransprüchen angegeben. Zusammenfassend wird die Erfindung nachfolgend charakterisiert. Bei einem rohrförmigen Filterelement aus mindestens einem Filterblatt, welches in Parallelfalten plissiert und an seinen beiden Faltenenden zu einem hohlzylindrischen Filterkörper verbunden ist, sind dessen beide Stirnflächen durch Endkappen dichtend eingefaßt. Von denen öffnet mindestens eine Endkappe als Anschlußkappe den Hohlkern zur Verbindung mit einem Gehäuseraum eines umgebenden Gehäuses. Die zwangsweise Strömungsführung des zu behandelnden Fluids längs der Falten erfolgt durch ein den Hohlkern des Filterkörpers durchsetzenden, an den Faltenkanten des Filterkörpers anliegenden Rohres, welches an einem Ende im Bereich der als Auslaß oder Einlaß dienenden Faltenbereiches offen ist und im Bereich des als Einlaß oder Auslaß dienenden Faltenbereichs diesen freigebend verjüngt ist und koaxial zu der die Gehäuseverbindung herstellenden Anschlußkappe für den zu behandelnden Fluidstrom einen Anschluß für den rezirkulierenden Fluidstrom bildet. Der koaxial zur Anschlußkappe angeordnete Anschluß und das an den Faltenkanten anliegende Rohr ist im Gehäuseanschluß zur Retentatführung fixiert und entweder Bestandteil des Gehäuses oder das Rohr ist Bestandteil des auswechselbaren Filterelementes. Das Trennelement dient zur rezirkulierenden Überströmung von zu behandelnden Fluiden zur Durchführung von Filtrations-, Pervaporations- und Chromatographieprozessen.

Durch die erfindungsgemäße Ausbildung des Filterelementes selbst ist es möglich, relativ großformatige Filterelemente in wiederverwendbaren Gehäusen aus Kunststoff oder Edelstahl einzusetzen. Diese Filterelemente lassen sich leicht auswechseln und handhaben und z.B. auf Integrität testen. Die konstruktive Ausgestaltung der Filterelemente führt dazu, daß sämtliche Anschlüsse des Gehäuses in einer Gehäusebasis untergebracht werden können und ein das Filterelement umschließendes Gehäuseoberteil ohne die Handhabung erschwerende Anschlüsse ausgebildet werden kann. Durch die erfindungsgemäße Ausbildung des Filterelementes ist es auch möglich, diese leicht auswechselbar in Gehäuse mit Mehrfachbestückung von Filterelementen anzuordnen. Auch ein dafür ausgebildetes Gehäuse weist sämtliche Einzelanschlüsse für die Filterelemente, Sammelräume für diese Einzelanschlüsse und die beiden notwendigen Hauptanschlüsse für Retentatzuführung, Retentatabführung und Permeatabführung in einer Gehäusebasis auf.

Der Erfindungsgedanke ist in zwei Ausführungsbeispielen anhand der beiliegenden Zeichnung näher erläutert. Dabei zeigt:

Fig. 1 eine Vertikalschnitt durch eine erste Ausführungsform von Filterelement und Gehäuse und

Fig. 2 in entsprechender Darstellung eine zweite Ausführungsform.

Das das Filterelement F aufnehmende Gehäuse 1,2 z.B. aus Edelstahl besteht aus dem Gehäuseunterteil 1 mit nicht dargestellten Stützfüßen, mit einer die Anschlußkappe 13 des Filterelementes F aufnehmenden Gehäuseöffnung 3, welche in einen Anschlußstutzen 4 zur Zuführung des zu behandelnden Fluids übergeht und dem koaxial diese Gehäuseöffnung 3 durchsetzenden Anschlußstutzen 5, welcher in eine Schulter 6' und in ein Rohr 6 übergeht, welches der Länge des Filterelementes F angepaßt ist. Dieses Rohr 5,6',6 dient zur Rückführung des Retentats. Weiterhin weist das Gehäuseunterteil 1 einen Anschluß 9 für die Permeatabführung aus dem Gehäuseraum 2' auf.

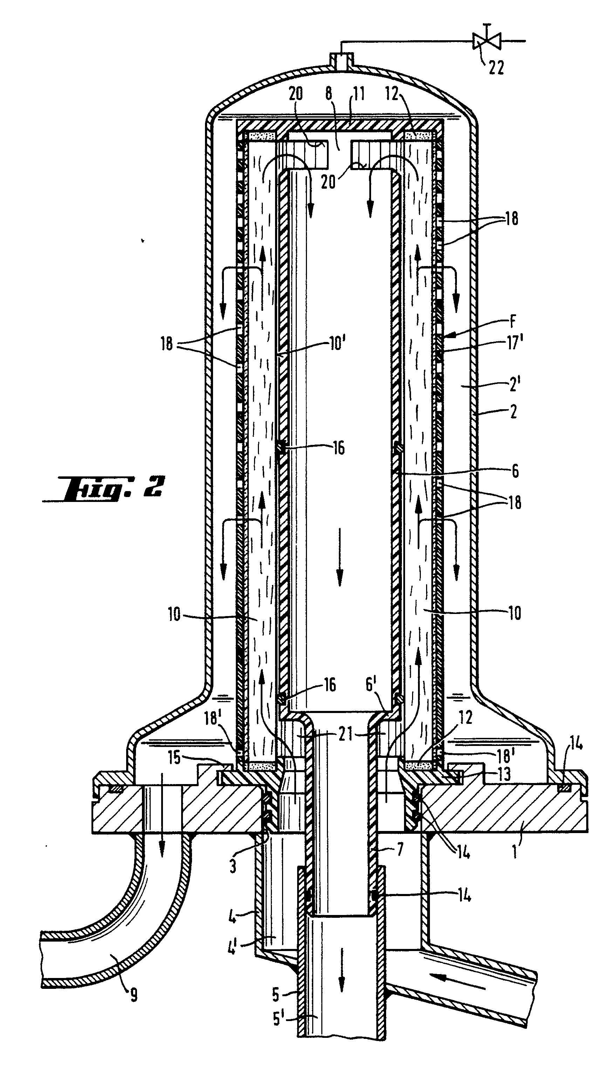

Abweichend hierzu endet bei der Ausführungsform gemäß Fig. 2 das Rohr 5 mit seinem Gehäuseraum 5' als Gehäusebestandteil unterhalb der Gehäuseöffnung 3. Das zur Rückführung des Retentats dienende Rohr 6 mit Schulter 6' und verjüngtem Rohrende 7 ist Bestandteil des Filterelementes F.

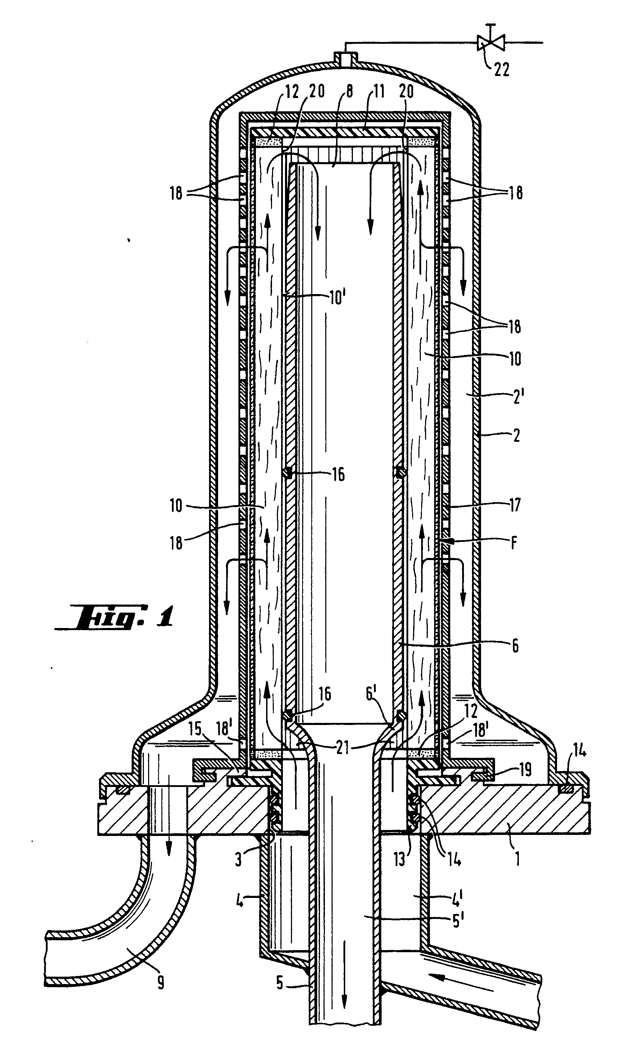

Das Filterelement F nach Fig. 1 besteht aus einem einlagigen oder nach Gesichtspunkten der notwendigen Trenneigenschaften aufgebauten mehrlagigen Filterblatt aus ggf. modifizierten Tiefenfiltermedien, Membranfiltern, nicht porösen Filterfolien, drainierenden Stützschichten in Form von Gittern, Vliesen, gelochten und geprägten Folien in den verschiedensten Kombinationen für die Feinfiltration, Mikrofiltration, Ultrafiltration, Chromatographie oder Pervaporation. Dieses Filterblatt, einlagig oder mehrlagig, ist in eine Vielzahl von Falten 10 plissiert und die Faltenenden sind an ihren Längsrändern dichtend zu einem hohlzylindrischen Filterelement verbunden, wie es durch den Stand der Technik bekannt ist.

Die Stirnflächen des Filterelementes F sind über eine Dichtungsmasse 12 mit den beiden Endkappen 11,13 leckdicht verbunden, wobei die Endkappe 11 geschlossen ist und die Endkappe 13 als offene Anschlußkappe ausgebildet ist und auf ihrer Außenseite einen Stutzen mit O-Ringdichtungen 4 und Verriegelungsnasen aufweist, die zur Arretierung des Filterelementes F am Gehäuseunterteil 1 mit an diesem angeordneten Verriegelungselementen 15 dienen.

Das Rohr 6 zur Rückführung des Retentats liegt dicht an dem von der Filtereinheit gebildeten inneren Hohlkern 10' an. Die Dichtlage kann bei plissierten Filtermedien z.B. durch mehrere über die Länge verteilt angeordnete O-Ringe unterstützt werden, die lediglich Strömungsschikanen bilden, damit nicht bevorzugte Kurzschlußpfade entstehen können. Das Rohr 6 endet nach oben hin etwas unterhalb der oberen Endkappe 11, so daß in diesem Bereich die Falten 10 zwischen Endkappe und Rohr einen Auslaß 20 bilden, der mit dem offenen Rohrende 8 korre spondiert. Im unteren Bereich geht etwas oberhalb der unteren Dichtmasse 12 das Rohr 6 mit einer Schulter 6' in das verjüngte Rohr 5 bzw. den Anschluß 5 über. Dadurch wird im Bereich der Anschlußkappe 13 ein Ringraum für die Zuführung des Retentats aus der Kammer 4' bildet, dessen Querschnittsfläche der Querschnittsfläche des verjüngten Rohres 5 bzw. der Retentatkammer 5' zur Rückführung des Retentats angeglichen ist. Wenn die Zuführung des zu behandelnden Fluids generell durch die Kammer 4' und die Rückführung durch die Kammer 5' erfolgt, kann die Querschnittsfläche der Kammer 5' auch in Anpassung an die Filtratleistung reduziert sein.

In der Ausführungsform gemäß Fig. 1 ist das Filterelement F auf seiner Außenseite durch ein hutförmig ausgebildetes perforiertes Rohr 17 umschlossen, welches an seinem unteren Ende ebenfalls Arretierungsmittel 19 aufweist, die hinter die Arretierungsmittel 15 des Gehäuses greifen. Die Perforationen 18 sind anwendungsbezogen zur Erzielung eines Rückstaueffekts im Anströmbereich so angeordnet, daß diese in ihrer Querschnittsfläche von unten nach oben zunehmen, um eine gesteuerte Filtratströmung zu erzeugen. Lediglich am tiefsten Punkt sind mehrere kleine Perforationen 18' zur Entleerung des Totvolumens auf der Filtratseite angeordnet.

Das zu behandelnde Fluid durchströmt also die Kammer 4', tritt in die Faltenöffnungen bei 21 ein, durchströmt die Falten in axialer Richtung, tritt aus den Faltenöffnungen bei 20 aus, in die Öffnung 8 des Rohres 6,6',5 ein und verläßt dieses als aufkonzentriertes Medium und tritt rezirkulierend wieder in die Kammer 4' ein.

Bei dieser Ausführungsform ist lediglich das eigentliche Filterelement F als Verbrauchsmaterial anzusehen, währenddessen das Rohr 6 zur Rückführung des Retentats Bestandteil des Gehäuses 1,2 ist und das perforierte Rohr 17' als wiederverwend bares z.B. Kunststoffteil dem Benutzer merhfach zur Verfügung steht bzw. je nach Anwendung vom Hersteller oder Anwender gegen eine andere Variante ausgetauscht werden kann.

Bei der Ausführungsform nach Fig. 2 ist abweichend das Rohr 6 mit Schulter 6' und unterem Rohrende 7 Bestandteil des eigentlichen Filterelementes F. Das perforierte Rohr 17' ist wiederum anwendungsbezogen aufgebaut, greift aber integriert in beide Endkappen 11 und 12 ein.

Funktionell besteht jedoch Übereinstimmung mit der Ausführungsform gemäß Fig. 1. Natürlich sind bezüglich Rohr 6 und Rohr 17 beide Ausführungsformen beliebig kombinierbar.

Nach demselben hier dargestellten Bauprinzip gemäß Fig. 1 und 2 lassen sich die erfindungsgemäßen Filterelemente auch in einer Vielzahl in einem Gehäuse mit einer Vielzahl von Durchlässen 3 unterbringen. Hierzu ist es notwendig, daß alle Durchlässe 3 in einer gemeinsamen ersten Kammer mit einem Hauptanschluß für die Zuführung des zu behandelnden Fluids münden und die Rohre 5 bis in eine weitere darunterliegende Gehäusekammer mit einem Hauptanschluß zur Retentatabführung münden, so daß insgesamt mindestens drei Hauptanschlüsse nämlich für die Zuführung des zu behandelnden Fluids, Retentatabführung und Permeatabführung im Gehäuseunterteil vorgesehen sind. Für bestimmte Anwendungsfälle kann es jedoch vorteilhaft sein, daß die Filterelemente einzeln angeströmt bzw. abgesperrt werden können.

In beiden Ausführungsformen nach Fig. 1 und 2 zeigt sich der Vorteil, daß durch die koaxiale Anordnung Undichtigkeiten zwischen der Retentatkammer 4' und 5' unbedenklich sind und lediglich eine absolute Leckdichtigkeit im Bereich der Anschlußkappe 13 mit den O-Ringen 14 zwischen Retentatraum 4' und dem Permeatraum 2' gewährleistet sein muß.

Bevorzugt wird das Filterelement über die Fluidkammer 4' angeströmt. Eine Strömungsumkehr über die Fluidkammer 5' ist ebenfalls möglich.

Durch diese einfachen konstruktiven Maßnahmen lassen sich z.B. die durch Plissierungen gegebenen großen frei zugänglichen Filterflächen im Rezirkulationsbetrieb überströmen, wobei durch die Druck- und die Radialverhältnisse bedingt, d.h. durch die Filtrationsrichtung und die Zunahme des freien Volumens zwischen den Plissierfalten mit dem Radius, sichergestellt ist, daß die gesamte Filterfläche erfaßt wird. Dadurch können Standzeiten und Filtrationsleistungen erheblich erhöht und bei Stillstandszeiten (keine Filtratabnahme) z.B. eine örtliche Verkeimung oder sich durch den Stillstand des Mediums ergebende andere Veränderungen des Mediums vermieden werden.

Filterelemente der beschriebenen Art können für zahlreiche Anwendungen im Bereich der Pharmazie, Biotechnologie, Lebensmitteltechnologie, Halbleitertechnologie, Umwelttechnik und chemischen Industrie und anderen Gebieten vorteilhaft eingesetzt werden.

Im folgenden werden einige Ausführungsformen erläutert.

Beispiel 1:

Bei einem Filterelement der beschriebenen Art für die Pervaporation besteht die plissierte Filtereinheit aus einer fluidselektiven Folie, die überströmseitig in direktem Kontakt mit dem zu behandelnden Fluid steht. Auf der Filtratseite ist sie durch ein oder mehrere, relativ offene drainierende Gewebe oder Vliese unterstützt. Das außenliegende Rohr 17 ist in diesem Fall sehr offen ausgebildet. Durch Kühlung des Gehäuses, an dessen Permeatausgang 9 ein Vakuum anliegt, läßt sich die Kondensation des Permeats unterstützen. Durch die Überströmung wird sichergestellt, daß der auszutragende Stoff an der Oberfläche nicht verarmt (konstante Trennleistung) und z.B. die Oberfläche spezifisch gereinigt werden kann.

Beispiel 2:

Bei einem modifizierten Filterelement der beschriebenen Art für die Halbleiter-Industrie besteht die plissierte und überströmte Filtereinheit aus einem beidseitig von drainierenden Vliesen und Gewebe gestützten Mikrofilter(n). Diese Filtereinheit wird nach außen von einem anderen Plissierzylinder (wie nach dem Oberbegriff des Hauptanspruches ausgebildet) umgeben. Beide Plissierzylinder sind leckdicht an den Endkappen 11,13 abgedichtet. Der Zwischenraum zwischen beiden Plissierzylindern kann mit Druckgas, gegebenenfalls durch einen Anschluß in der Endkappe 11, angesteuert bzw. entgast werden. Der äußere Plissierzylinder ist analog wie der innere Plissierzylinder aufgebaut, kann aber je nach Filtrationsziel feinere Mikrofilter bzw. auch Ultrafilter enthalten. Die gesamte Filtereinheit kann einschließlich Gehäuse aus inertem Kunststoff aufgebaut sein. Filtriert wird z.B. Wasser mit dem spezifischen Widerstand 18 MΩ . cm, welches am "point of use" zum Spülen von "wafern" benötigt wird und vorher noch einmal extrem partikelfrei oder bakterienfrei filtriert werden muß. Die Überströmung stellt sicher, daß bei Nichtabnahme von Filtrat die Retentatseite nicht verkeimt (UV-Licht im Kreislauf) oder sich die Leitfähigkeit des Wassers ändert (chemisches Gleichgewicht). Andererseits erlaubt dieses Filterelement eine Abnahme oder Sperrung von Filtrat am "point of use", ohne daß hinter der letzten Membran bzw. filterwirksamen Schicht ein Ventil geöffnet werden muß. Letztere geben häufig Partikel ab. Will man die Filtratabnahme unterbrechen, so steuert man den Zwischenraum zwischen den Plissierzylindern bevorzugt mit einem reinen, inerten Druckgas an. Ist der Druck der Überströmseite erreicht, so wird die Filtration unterbunden und die gesamte Flüssigkeit aus dem Zwischenraum zwischen den Plissierzylindern ist in den Filtratraum gedrückt. Wird wieder Filtrat benötigt, so wird der Zwischenraum langsam auf Normaldruck gebracht. Die Filtration über den ersten Plissierzylinder setzt ein, ohne daß Pulsationen und eine damit möglicherweise verbundene Partikelabgabe am zweiten Plissierzylinder (Filtrat) auftreten.

Beispiel 3:

Bei einem Filterelement der beschriebenen Art für die pharmazeutische Industrie besteht die plissierte Filtereinheit aus einem oder zwei Ultrafiltern, von denen einer überströmseitig im direkten Kontakt mit dem vorher mittels Mikrofiltration steril filtrierten Fluids steht. Auf der Filtratseite ist der Ultrafilter oder sind die Ultrafilter durch ein Gewebe, Vlies oder eine gelochte geprägte Folie abgestützt. Eine Überströmung ist nötig, um eine Oberflächenpolarisation, d.h. Konzentrierung und möglicher Durchbruch der Pyrogene auf und durch die sehr dünne "aktive Schicht" der Ultrafiltrationsmembrane zu verhindern.

Beispiel 4:

Bei einem Filterelement der beschriebenen Art für die Umwelttechnik kann auf Beispiel 1 verwiesen werden, wenn es z.B. um den Austrag von halogenierten Kohlenwasserstoffen, Phenolen oder giftigen Polymermonomeren geht. Bezogen auf z.B. die Denitrifikation von Wasser kann Beispiel 5 herangezogen werden. Je nach Problemstellung sind diverse, spezifische Ausführungsformen realisierbar soweit eine Überströmung des zu behandelnden Fluids oder von Hilfsmedien vorteilhaft oder nötig ist.

Beispiel 5:

Das Filterelement der beschriebenen Art für Chromatographieverfahren enthält eine Filtereinheit, in dem Mikro- und/oder Ultrafilter oder auch Tiefenfilter integriert sind, die so modifiziert werden, das zu chromatographierende Medium rezirkuliert überströmend die innere Oberfläche der Filtereinheit und tritt je nach Druck auf der Filtratseite anteilmäßig durch die Filtereinheit, so daß die gesamte aktive Oberfläche wirksam wird. Die Durchströmbarkeit der Filtereinheit bietet auch wesentliche Vorteile bei der Elution und der Regeneration, die in beiden Richtungen und überströmend gesteuert werden können.

Beispiel 6:

Bei einem Filterelement der beschriebenen Art für die Biotechnologie wird z.B. eine Plissierung mit einem Ultrafilter oder Mikrofilter, der beidseitig oder einseitig von Drainageschichten geschützt ist, innen permanent vom Fermenterinhalt überströmt.

Je nach Gasdruck im Gehäuse wird filtriert oder nicht. So können bei Bedarf Proben genommen bzw. Filtrat entnommen werden. Andererseits läßt sich je nach Bubble-Point der Membran so auch definiert Gas in die Fermenterbrühe einbringen, indem z.B. eine hydrophobe Mikrofilter-Membran verwendet wird oder bei hydrophilen Membranen der Differenzdruck im Gehäuse zum Überströmdruck z.B. knapp unterhalb des Bubble-Points liegt. Verwendet man hydrophile Membranen, so können durch Fluten des Gehäuses und Regulierung des Differenzdruckes Medien definiert und (steril) filtriert dem überströmenden Fermenterinhalt zudosiert werden. Filtriert wird dann von außen nach innen.

**Ansprüche**

1. Rohrförmiges Filterelement aus mindestens einem Filterblatt, welches in parallele Falten plissiert und an seinen beiden Faltenenden zu einem hohlzylindrischen Filterkörper verbunden ist, dessen beide Stirnflächen durch Endkappen dichtend eingefaßt sind und von denen mindestens eine Endkappe (Anschlußkappe) den Hohlkern zur Verbindung mit einem Gehäuseraum eines umgebenden Gehäuses öffnet und bei dem das zu behandelnde Fluid in Strömungspfaden längs der Falten zwangsweise rezirkulierend zwischen einem Einlaß in die Falten an einem Rohrende und einem Auslaß am anderen Rohrende als Retentat geführt und ein Permeat aus einem weiteren Gehäuseraum abführbar ist, dadurch gekennzeichnet, daß die zwangsweise Strömungsführung des zu behandelnden Fluids längs der Falten (10) durch ein den Hohlkern (10') des Filterkörpers (F) durchsetzendes, an den Faltenkanten des Filterkörpers (F) anliegendes Rohr (6,6',5 bzw. 6, 6',7) gebildet ist, welches an einem Ende im Bereich des als Auslaß oder Einlaß (20) dienenden Faltenbereiches offen ist und im Bereich des als Einlaß oder Auslaß (21) dienenden Faltenbereichs diesen freigebend verjüngt ist und koaxial zu der die Gehäuseverbindung herstellenden Anschlußkappe (13) für den Retentatstrom einen Anschluß (5) für den rezirkulierenden Fluidstrom bildet.

2. Filterelement nach Anspruch 1, dadurch gekennzeichnet, daß der koaxial zur Anschlußkappe (13) angeordnete Anschluß (5) und das an den Faltenkanten anliegende Rohr (6,6') im Gehäuseanschluß (4) zur Retentatführung fixiert und Bestandteil des Gehäuses (1,2) ist.

3. Filterelement nach Anspruch 1, dadurch gekennzeichnet, daß der koaxial zur Anschlußkappe (13) angeordnete Anschluß (5) und das an den Faltenkanten anliegende Rohr (6, 6',7) in einen Anschlußstutzen (5) des Gehäuses (1,2) lösbar dichtend fixiert und Bestandteil des Filterelementes (F) sind.

4. Filterelement nach Anspruch 1 bis 3, dadurch gekennzeichnet, daß das an den Faltenkanten anliegende Rohr (6) mehrere über die Länge verteilt angeordnete elastische, an den Faltenkanten anliegende und die Zwangsführung in die Faltentiefe unterstützende Strömungsschikane wie O-Ringe (16) oder dergleichen aufweist.

5. Filterelement nach Anspruch 1 bis 4, dadurch gekennzeichnet, daß die innere Querschnittsfläche des verjüngten Rohres (5 bzw. 7) im Bereich der Faltenöffnungen und der Anschlußkappe (13) etwa der Querschnittsfläche eines die Außenseite des verjüngten Rohres (5 bzw. 7) und die Innenseite der Anschlußkappe (13) umgebenden Ringraumes entspricht.

6. Filterelement nach Anspruch 1 bis 5, dadurch gekennzeichnet, daß dieser Ringraum bevorzugt den Anschluß für die Fluidzuführung und das Innere des Rohres (5,6',6 bzw. 7,6',6) den Anschluß zur Retentatrückführung bildet.

7. Filterelement nach Anspruch 1 bis 6, dadurch gekennzeichnet, daß der Filterkörper (F) außenseitig durch ein perforiertes Stützrohr (17) umschlossen ist, dessen Perforationsquerschnittsfläche vom Faltenbereich, der im Retentatzustrom liegt, zum Faltenbereich hin, der im Retentatrückstrom liegt, zunimmt und vorzugsweise unmittelbar im Zustrombereich bis auf eine tiefliegende, in den Filtratraum (2') weisende Entleerungsöffnung geschlossen ist.

8. Filterelement nach Anspruch 1 bis 7, dadurch gekennzeichnet, daß das perforierte Rohr (17) hutförmig ausgebildet und mit seinem Umfangsrand an der Anschlußkappe (13) und/oder am Gehäuse arretierbar ist.

9. Filterelement nach einem der Ansprüche 1 bis 8, gekennzeichnet durch seine Verwendung als Filterelement zur Vorfiltration, Feinfiltration, Mikrofiltration, Ultrafiltration, Pervaporation oder Chromatographie.

10. Filterelement nach Anspruch 1 bis 7 aufnehmendes Gehäuse, gekennzeichnet durch ein glockenförmiges Gehäuseoberteil (2) und ein lösbar damit verbundenes Gehäuseunterteil (1) mit einem Koaxialanschluß (3,4,5) für die Fluidzu- und rückführung und einen weiteren Anschluß (9) für die Filtratabführung.

11. Filterelemente nach Anspruch 1 bis 7 aufnehmendes Gehäuse, gekennzeichnet durch ein glockenförmiges Gehäuseoberteil (2) und ein damit lösbar verbundenes Gehäuseunterteil (1) mit einer Vielzahl von in das Gehäuseoberteil (2) weisende und mit einer Vielzahl von mit Filterelementen (F) dichtend verbindbaren Koaxialanschlüssen (3,4,5) für die Fluidzu-und rückführung, wobei sämtliche Anschlüsse (3,4) für die Fluidzuführung in einer ersten Gehäusekammer und die Anschlüsse (5) für die Fluidrückführung in einer zweiten Gehäusekammer des Gehäuseunterteiles (1) mit Hauptanschlüssen münden.

**Fig. 1**

*Fig. 2*